# EUROPÄISCHE PATENTSCHRIFT

(11) **EP 1 649 301 B1**
(45) Veröffentlichungstag und Bekanntmachung des Hinweises auf die Patenterteilung: **23.01.2008**
(21) Anmeldenummer: 04763333.4
(22) Anmeldetag: 19.07.2004
(51) Int. Cl.: G01S 7/52

(54) **VERFAHREN UND SCHALTUNGSANORDNUNG ZUR ZERSTÖRUNGSFREIEN PRÜFUNG VON GEGENSTÄNDEN MITTELS ULTRASCHALLWELLEN**
METHOD AND CIRCUIT ARRANGEMENT FOR DISTURBANCE-FREE EXAMINATION OF OBJECTS BY MEANS OF ULTRASONIC WAVES
PROCEDE ET CIRCUIT DE CONTROLE NON DESTRUCTIF D'OBJETS AU MOYEN D'ONDES ULTRASONORES

(30) Priorität: 29.07.2003 DE 10334902
(43) Veröffentlichungstag der Anmeldung: 26.04.2006
(73) Patentinhaber: GE Inspection Technologies GmbH, 50354 Hürth (DE)
(72) Erfinder: MAURER, Albrecht, 63500 Seligenstadt (DE); STRAUSS, Michael, 53776 Mömbris (DE); DE ODORICO, Walter, 65779 Kelkheim (DE); KOCH, Roman, 63825 Blankenbach (DE)
(74) Vertreter: Stoffregen, Hans-Herbert
(86) Internationale Anmeldenummer: PCT/EP2004/008048
(87) Internationale Veröffentlichungsnummer: WO 2005/012941

(56) Entgegenhaltungen:
- EP-A- 0 825 453
- DE-A- 3 236 017
- ROY O ET AL: "Control of the ultrasonic beam transmitted through an irregular profile using a smart flexible transducer: modelling and application" ULTRASONICS, IPC SCIENCE AND TECHNOLOGY PRESS LTD. GUILDFORD, GB, Bd. 40, Nr. 1-8, Mai 2002 (2002-05), Seiten 243-246, XP004357202 ISSN: 0041-624X
- MAHAUT S ET AL: "Development of phased array techniques to improve characterization of defect located in a component of complex geometry" ULTRASONICS, IPC SCIENCE AND TECHNOLOGY PRESS LTD. GUILDFORD, GB, Bd. 40, Nr. 1-8, Mai 2002 (2002-05), Seiten 165-169, XP004357188 ISSN: 0041-624X
- MAHAUT S ET AL: "An adaptive system for advanced NDT applications using phased arrays" ULTRASONICS, IPC SCIENCE AND TECHNOLOGY PRESS LTD. GUILDFORD, GB, Bd. 36, Nr. 1-5, Februar 1998 (1998-02), Seiten 127-131, XP004119500 ISSN: 0041-624X
- CASSEREAU D ET AL: "The phased array technology - application to time-reversal in acoustics" PHASED ARRAY SYSTEMS AND TECHNOLOGY, 2000. PROCEEDINGS. 2000 IEEE INTERNATIONAL CONFERENCE ON DANA POINT, CA, USA 21-25 MAY 2000, PISCATAWAY, NJ, USA,IEEE, US, 21. Mai 2000 (2000-05-21), Seiten 461-464, XP010504632 ISBN: 0-7803-6345-0

## Beschreibung

Die Erfindung bezieht sich auf ein Verfahren zur Verarbeitung von Signalen gemäß den Merkmalen der Ansprüche 1 und 10 sowie auf eine Schaltungsanordnung mit Merkmalen des Anspruchs 16.

In der DE-A-32 36 017 ist ein Verfahren und eine Schaltungsanordnung das eingangs genannten Art zur Rundumabtastung eines Werkstofffehlers mittels getaktetem Array bei hochfrequenter Signalverarbeitung zur Ermittlung von Fehlern in Werkstoffen mittels Ultraschall beschrieben. Es ist vorgesehen, dass ein Array-Prüfkopf in verschiedenen Positionen getaktet wird, die Laufzeit unter Berücksichtigung der speziellen Schallgeschwindigkeit gemessen wird, die Amplituden der Signale gemessen werden, aus diesen Signalen die Intensität ermittelt und die Intensitätsverteilung z. B. auf einem Bildschirm wiedergegeben wird. Mit Hilfe des Verfahrens ist es möglich, die Ränder von voluminösen oder rissartigen Fehlern zu beschreiben. Durch das Verfahren des Array-Prüfkopfes in verschiedene Positionen ist eine Fehlererkennung mit einer hohen Geschwindigkeit nicht möglich. Ferner sind Ungenauigkeiten durch Verfahren des Prüfkopfes in die verschiedenen Positionen möglich.

Ein Verfahren zur Verarbeitung von Signalen, die reflektierten Wellen entsprechen, die von einer Struktur übertragen oder gebrochen wurden, um eine Erkundung und Analyse der Struktur dieses Materials vornehmen zu können, ist in der EP 0 825 453 B1 beschrieben. Bei dem beschriebenen Verfahren wird ausgenutzt, dass jeder Punkt eines zu überprüfenden Gegenstandes zu einer reflektierten Welle fuhrt, die sodann an Positionen der Speicher gespeichert wird, die in Form von Parabelbögen verteilt sind, deren Charakteristiken von der Entfernung des Punktes zur Sonde und vom Strahlungsdiagramm jedes Elementes abhängen. Bei dem bekannten Verfahren wird ein Prüfkopf verwendet, der linear ausgebildet ist und sich aus einer Mehrzahl von Sende-Empfangselementen mit geringen Abmessungen zusammensetzt. Der gleiche Prüfkopf wird dabei zum Senden und Empfangen verwendet. Zunächst wird eine Wellenfront in den zu prüfenden Gegenstand abgesendet und diejenigen Wellen empfangen, die von der Struktur reflektiert weiden.

Anschließend erfolgt eine Digitalisierung und Speicherung der Information, die von den Sensorelementen abgegeben werden, und zwar in einem Speicherelement, welches für jedes Sensorelement eine Zeile aufweist.

Anschließend erfolgt eine Rekonstruktion und/oder Analyse der Struktur des Gegenstandes anhand der Informationen, die in den Speicherelementen abgelegt wurden. Dabei wird für jeden Punkt des Gegenstandes die Position des Speicherelementes berechnet, die die Signale enthalten, die von den Sensorelementen geortet worden sind und den Wellen entsprechen, die von diesem Punkt reflektiert oder übertragen worden sind. Diese Position wird mit Hilfe eines Adressierungsgesetzes berechnet, dessen Parameter von der Position dieses Punktes im Verhältnis zu den Sensorelementen abhängen. Ferner werden für jeden Punkt die Zeilen des Feldspeichers an den jeweiligen Positionen gelesen, die zuvor für diesen Punkt berechnet worden sind, wobei auf die für diesen Punkt gelesenen Werte eine mathematische Operation angewendet wird, um ein Ergebnis zu erhalten, das für den Umfang der Welle repräsentativ ist. Für die Berechnung werden alle Zellen des Speicherfeldes parallel für diesen Punkt an den Positionen gelesen, die für diesen Punkt in den jeweiligen zugeordneten Adressierungsspeichern angegeben sind.

Da die Berechnung jedes Lesegesetzes zum Auslesen des Speichers zu lange dauern würde, um dies in Echtzeit auszuführen, erfolgt diese Berechnung im Voraus und die Ergebnisse werden in spezifischen "Adressenspeichern" gespeichert, die jeder Zeile des "Feldspeichers" zugeordnet sind.

Daraus folgt, dass das beschriebene Verfahren nur zur Erkennung bestimmter, d. h. vorher definierter Strukturen geeignet ist. Der Inhalt des Feldspeichers wird nach Ausführung der mathematischen Operation in einen Bildspeicher hinterlegt, wobei Orts- und Laufzeitinformationen berücksichtigt werden. Bei dem Verfahren werden berechnete B-Bilder ausgewertet, wie dies beispielsweise in der medizinischen Diagnostik üblich ist. Für die automatische Werkstoffprüfung sollten B-Bilder jedoch nicht herangezogen werden, da für die Auswertung lange Auswertezeiten benötigt werden.

Des Weiteren ist zu bemerken, dass bei senkrechter Einschallung Einschränkungen in der Fehlerdetektion gegeben sind, da nur eine Fehlerlage erkennbar ist. Ferner treten Unsicherheiten in der Fehlerauswertung auf, da feste geometrische Beziehungen zwischen dem Prüfkopf und dem Prüfling vorausgesetzt werden, da Ortsinformationen bei der Fehlerbestimmung notwendig sind. Daher ist das bekannte Verfahren gegen übliche Dejustagen des Prüfkopfes sehr empfindlich.

In der Druckschrift O. Reu et al: "Control of ultrasonic beam transmitted through an irregular profile using a smart flexible transducer: modelling and application" Ultrasoncis, IPC Science and technology Press Ltd., Guildford, GB, Band 40, Nr. 1 bis 8, Mai 2002, ist ein aus 54 Elementen zusammengesetzter Prüfkopf beschrieben, dessen Oberfläche einer der zu prüfenden Kontur angepasst ist. Diese Ausführungsform ist aufwändig und fehleranfällig.

In der Druckschrift S. Mahaut u.a.: Development of phased array techniques to improve charcaterization of defect located in a component of complex geometry", Ultrasonics, IPC Science and Technology Press Ltd., Guildford, GB, Band 40, Nr. 1 bis 8, Mai 2002, wird die Anwendung eines Phased Array Prüfkopfes beschrieben. Insbesondere bezieht sich die Druckschrift auf die Abtastung komplexer Geometrien, wobei auf der Grundlage von berechneten Verzögerungsregeln eine Adaption, an verschiedene komplexe Formregeln ausgeführt werden kann. Die Verzögerungsregeln erlauben eine wirksame Kompensation von Strahlverzerrungen, die durch die Profilgeometrie erzeugt werden.

In der Druckschrift von S. Mahaut u. a.: "An adaptive system for advanced NDT applications using phased arrays", Ultrasoncs, IPC Science and Technology Press, Ltd., Guildford, GB, Band 36, Nr. 1 bis 5, Februar 1998, wird ein adaptives System auf der Basis von Phased Array Prüfköpfen beschrieben. Das adaptive System basiert auf optimierten Phased Array Prüfköpfen, die mit einem Mehrkanal-Ortungssystem verbunden sind. Das Ortungssystem stellt Verzögerungs- und Amplitudenregeln zur Ausbildung einer Ultraschallwelle bereit. Die Fähigkeit des Systems, das empfangene Signal des Array zu speichern, ermöglicht verschiedene Rekonstruktionsverfahren. Experimentell gemessene Verzögerungsregeln können gewonnen werden, um eine optimale Darstellung der Oberfläche zu erhalten.

Davon ausgehend liegt der vorliegenden Erfindung das Problem zugrunde, ein Verfahren und eine Schaltungsanordnung der bekannten Art dahingehend weiterzubilden, dass Fehlstellen der Struktur eines Gegenstandes bei hoher Geschwindigkeit und einem verbesserten Signal-/Rauschverhältnis erfasst werden können. Ferner soll das Verfahren gegen mögliche Dejustagen des Prüfkopfes unempfindlich sein.

Das Verfahren wird erfindungsgemäß, u. a. durch die Merkmale des Anspruchs 1 gelöst.

Dabei ist vorgesehen, dass eine Fehlstelle durch ein phasenstarres Addieren der zu gleichen Laufzeiten empfangenen gespeicherten Amplitudenwerte ermittelt wird. Hierbei wird ausgenutzt, dass bei Bestrahlung eines Gegenstandes mittels eines als Phased Array Transducer ausgebildeten Prüfkopfes, d. h. bei Absendung einer kompletten Wellenfront, Echos in jedem der gleichzeitig auf Empfang geschalteten Empfangselemente des Prüfkopfes empfangen werden, wobei die Amplitudenwerte der empfangenen Echos zu denselben Laufzeiten empfangen werden. Hierdurch eröffnet sich die Möglichkeit die Amplitudenwerte der empfangenen Signale längs einer Laufzeit zu addieren, mit dem Vorteil, dass die die Fehlstelle in der Struktur kennzeichnenden Amplitudenmaxima verstärkt und sich die weiteren durch die einzelnen Empfangselemente empfangenen Signale gegenseitig nahezu aufheben.

Dadurch zeichnet sich das erfindungsgemäße Verfahren einerseits durch eine sehr hohe Geschwindigkeit der Fehlererkennung aus, da aufgrund der Aussendung einer kompletten Wellenfront die aus dem Stand der Technik übliche sequenzielle Methode vermieden wird und andererseits ein gegenüber dem Stand der Technik verbessertes Signal-rauschverhältnis erreicht wird. Das Verfahren ist auch robust gegen beispielsweise eine Dejustage des Prüfkopfes, da Ortsinformationen nicht in das Verfahren einfließen.

Zur Erkennung von auf einer äußeren Oberfläche des Gegenstandes liegenden Fehlstellen (Außenfehler), insbesondere bei der zerstörungsfreien Prüfung von Rohren mittels Ultraschall, erfolgt eine Auswertung von Punktwellensignalen, welche von Reflexionen an Außenfehlern des Gegenstandes ausgehen. Dabei erfolgt eine Addition der in dem Speicher hinterlegten Amplitudenwerte nicht längs ein und derselben Laufzeit, sondern in einer Richtung, die senkrecht oder im Wesentlichen senkrecht zu Interferenzmustern der empfangenen Amplitudenwerte der Punktwellen der Außenfehler AF verläuft.

Durch die phasenstarre Addition der Amplitudenwerte längs einer Laufzeit können Fehlstellen allgemein erkannt werden, wobei jedoch eine Aussage darüber, ob es sich um einen Außenfehler oder einen Innenfehler handelt, aus dem Summensignal nicht ableitbar sind. Wie zuvor erläutert, können Außenfehler dadurch erkannt werden, indem eine Addition von Amplitudenwerten senkrecht oder im Wesentlichen senkrecht zu Interferenzmustern der von dem Außenfehler ausgehenden Punktwellen erfolgt. Durch eine Koinzidenzschaltung erfolgt schließlich ein Vergleich des bei der phasenstarren Addition der gespeicherten Amplitudenwerte längs einer Laufzeit ermittelten Signals mit dem bei der Addition der Amplitudenwerte der Interferenzmuster ermittelten Signal, wobei ein Außenfehler vorliegt, wenn beide Signale eine Fehlstelle anzeigen.

Zur Einstellung eines an die Messbedingungen, wie beispielsweise Fehlerart (Längsfehler, Schrägfehler), Materialbeschaffenheit sowie der Form des zu prüfenden Gegenstandes angepassten Einstrahlwinkels α können die einzelnen Sendeelemente des Phased Array Transducers zeitverzögert angesteuert werden (Phasing). Bei der Prüfung beispielsweise eines Rohres kann eine Einschallung in Abhängigkeit einer Fehlerlage (Schrägfehler, Längsfehler) wahlweise in Längsrichtung oder in Umfangsrichtung erfolgen.

Des Weiteren ist vorgesehen, dass zur Bestimmung des Fehlerortes eine laufzeitabhängige Amplitudenkorrektur des bei der Addition ermittelten Summensignals durchgeführt wird, wobei das empfangene Summensignal mit einem Referenzwert verglichen wird.

Zur weiteren Datenreduktion ist vorgeseben, dass die empfangenen Signale unmittelbar nach der Digitalisierung gefiltert werden vorzugsweise mittels eines Wavelet-Filters.

Das Problem wird durch eine Schaltungsanordnung gemäß den Merkmalen des Anspruchs 16 gelöst, wobei ein Summierer zur phasenstarren Addition der in dem Speicherbaustein hinterlegten Amplitudenwerte vorgeschen ist.

Des Weiteren bezieht sich die Erfindung auf ein Verfahren zur zerstörungsfreien Prüfung einer Kontur wie Kante, Biegung oder Krümmung eines Gegenstandes.

Nach dem Stand der Technik werden Konturen der oben genannten Art in Form von Kanten geprüft, indem diese mit einer im Wesentlichen planaren Wellenfront beschallt werden. Dabei wird ein im Wesentlichen der Kontur des zu prüfenden Gegenstandes entsprechendes Interferenzmuster empfangen, welches jedoch zur Auswertung auf Fehlstellen in der Struktur des Gegenstandes ungeeignet ist.

Davon ausgehend liegt der Erfindung das Problem zu Grunde, ein Verfahren zur zerstörungsfreien Prüfung von einer Kontur eines Gegenstandes mittels Ultraschallwellen zur Verfügung zu stellen, welches eine verbesserte Erkennung von Fehlstellen in der Struktur des Gegenstandes im Bereich der Kontur ermöglicht.

Zur Losung des Problems wird vorgeschlagen, dass die Kontur einer Oberfläche des zu prüfenden Abschnittes des Gegenstandes erfasst und abgespeichert wird, dass die unabhängigen Sendeelemente derart zeitverzögert angesteuert werden, dass die ausgehende Wellenfront parallel oder in etwa parallel zu der Oberflächenkontur verläuft und dass die von dem Gegenstand reflektierten Wellen zeitverzögert empfangen werden und ein im Wesentlichen planares Interferenzmuster erzeugen.

Bei einer bevorzugten Verfahrensweise ist vorgesehen, dass die Kontur des Gegenstandes ermittelt wird, indem eine bezogen auf eine Senderebene planare Wellenfront auf die zu prüfende Kontur ausgesendet wird, dass die von der Kontur des Gegenstandes reflektierten Wellen mittels der Vielzahl voneinander unabhängigen Empfangselemente empfangen, digitalisiert und die digitalisierten Signale zumindest nach ihrer Laufzeit in dem Speicherelement gespeichert werden und dass aus dem definierten Abstand A des Prüfkopfes zum Gegenstand und den unterschiedlichen Laufzeiten der empfangenen Signale die Kontur des Gegenstandes berechnet wird.

Das Verfahren zeichnet sich dadurch aus, dass durch zeitverzögerte Ansteuerung der unabhängigen Sendeelemente eine Wellenfront derart ausgesendet wird, dass diese parallel oder im Wesentlichen parallel zu einer Oberfläche der Struktur des zu prüfenden Gegenstandes verläuft.

Beim Empfangen der von der Kontur des Gegenstandes reflektierten Welle erfolgt ebenfalls ein zeitverzögerter Empfang mittels der ansteuerbaren Empfangselemente, wodurch Signale empfangen werden, welche ein parallel oder im Wesentlichen parallel zu der Oberfläche der Kontur des Gegenstandes verlaufendes Interferenzmuster erzeugen. In diesem Interferenzmuster können sodann Fehlstellen der Struktur des Gegenstandes auf einfache Weise ermittelt werden.

Aufgrund von Herstellungsschwankungen kann es in der Kontur des zu prüfenden Gegenstandes zu Unregelmäßigkeiten kommen, so dass gemäß einer weiter bevorzugten Verfahrensweise vorgesehen ist, dass die Kontur des Gegenstandes vorzugsweise online, d. h. während eines Messvorgangs ermittelt wird. Hierzu ist vorgesehen, dass eine planare Wellenfront auf die zu prüfende Kontur ausgesendet wird, dass die von der Kontur des Gegenstandes reflektierten Wellen mittels der Vielzahl voneinander unabhängigen Empfangselemente empfangen, digitalisiert und die digitalisierten Signale zumindest nach Laufzeit in einem Speicherelement in dem Speicherelement gespeichert werden und dass aus dem definierten Abstand des Prüfkopfes zum Gegenstand und den unterschiedlichen Laufzeiten der empfangenen Signale die Kontur des Gegenstandes berechnet wird.

Durch die Online-Nachführung bzw. Anpassung an die sich ändernde Kontur des Gegenstandes ist eine stets gleichwertige Auswertung auf Fehlerstellen möglich.

Die Nachführung wird ermöglicht, indem das empfangene parallel oder im Wesentlichen parallel zu der Kontur der Oberfläche des Gegenstandes verlaufende Interferenzmuster mit einem Sollmuster verglichen wird, wobei bei Abweichung des empfangenen Interferenzmusters von dem Sollmuster eine bezogen auf die Ebene der Sendeelemente parallele oder im Wesentlichen parallele Wellenfront ausgesendet wird, um die aktuelle Kontur des zu prüfenden Gegenstandes aus den reflektierten Wellen zu berechnen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

### Es zeigen:

- Fig. 1: eine schematische Darstellung einer von einem Prüfkopf (Phased Array Transducer) ausgehenden Wellenfront durch ein Medium wie Wasser auf einen zu prüfenden Gegenstand wie Stahlplatte,
- Fig. 2: eine Darstellung von Amplitudenwerten der von den einzelnen Empfangselementen EL1-ELN eines Prüfkopfes empfangener Amplituden mit unterschiedlichen Laufzeiten (typischer B-Scan),
- Fig. 3: eine Darstellung ausgewählter Strahlenwege der Ultraschallwellenfront gemäß Fig. 1,
- Fig. 4: eine Darstellung des Amplitudenverlaufs über die Laufzeit eines einzelnen Empfangselementes ELX gemäß Fig. 2,
- Fig. 5: eine Darstellung des Amplitudenverlaufs der Summen laufzeitgleicher Amplitudenwerte verschiedener Empfangselemente zur Auswertung einer Fehlerstelle,
- Fig. 6: einen prinzipiellen Messaufbau zur zerstörungsfreien Prüfung eines Rohres,
- Fig. 7: ein schematisches Blockschaltbild einer Schaltungsanordnung zur Verarbeitung der empfangenen Signale,
- Fig. 8: eine Prinzipdarstellung der Strahlenwege einer an der äußeren Oberfläche liegenden. Fehlstelle,
- Fig. 9: eine Prinzipdarstellung der Strahlenwege einer an der inneren Oberfläche liegenden Fehlstelle,
- Fig. 10a: eine schematische Darstellung einer von einem Prüfkopf ausgehenden Wellenfront zur Bestimmung der Kontur eines zu prüfenden Gegenstandes,
- Fig. 10b: eine schematische Darstellung eines empfangenen Interferenzmusters (B SCAN) der Kontur des zu prüfenden Gegenstandes,
- Fig. 11a: eine schematische Darstellung einer von dem Prüfkopf ausgehenden Wellenfront, welche parallel oder im Wesentlichen parallel zu der Oberfläche der Kontur des zu prüfenden Gegenstandes verläuft und
- Fig. 11b: eine schematische Darstellung eines im Wesentlichen ebenen Interferenzmusters zur einfachen Auswertung von Fehlstellen.

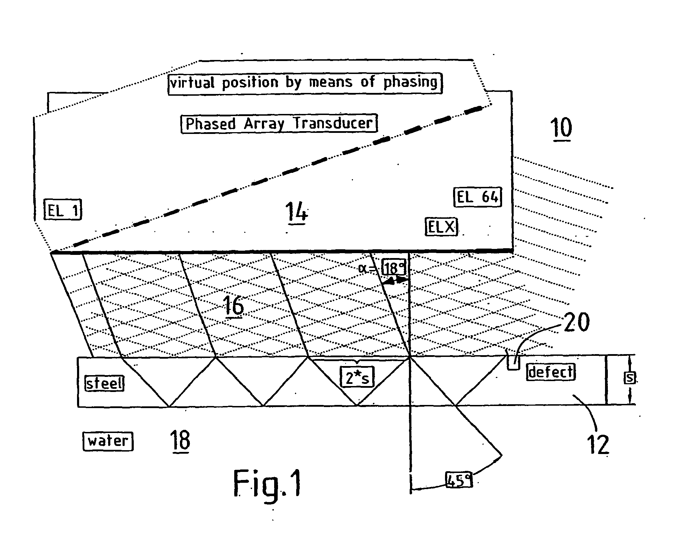

Fig. 1 zeigt rein schematisch eine Anordnung 10 zur zerstörungsfreien Prüfung eines Gegenstandes 12, welche im dargestellten Ausführungsbeispiel als Stahlplatte dargestellt ist, mittels einer von einem Prüfkopf 14 ausgehenden Ultraschall-Wellenfront 16, welche durch ein flüssiges Medium 18 wie Wasser in den Gegenstand 12 eingekoppelt wird. Durch die Prüfung sollen Fehlstellen 20 in der Struktur des Gegenstandes 12 erfasst werden.

Der Prüfkopf 14 umfasst eine Vielzahl von Sende-/Empfangseleroenten EL1 bis ELN, die jeweils vorzugsweise gleichzeitig oder phasenversetzt als Sendeelemente und vorzugsweise gleichzeitig als Empfangselemente geschaltet werden.

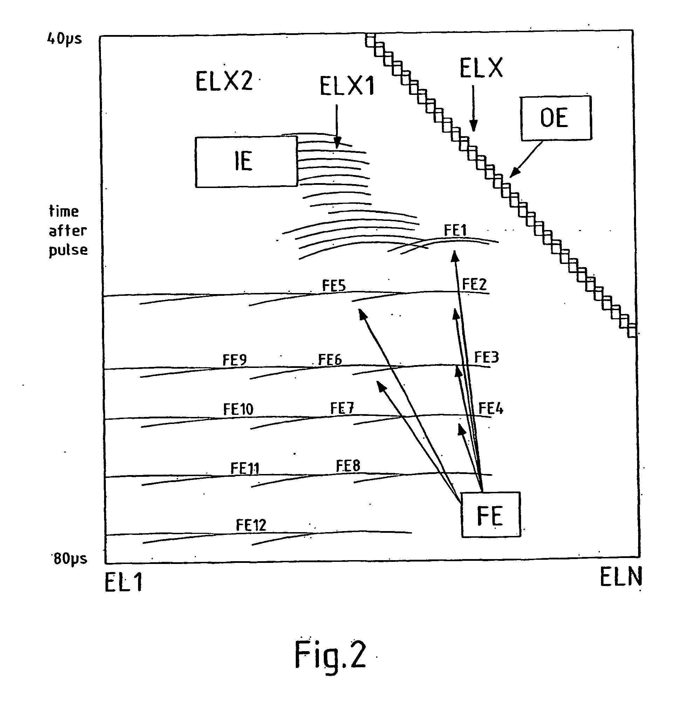

Fig. 2 zeigt anhand eines Graustufenbildes einen üblichen B-Scan einer äußeren Fehlstelle eines ebenen Gegenstandes, welcher mit einem Phased Array Transducer unter einem Einstrahlwinkel von α = 18 ° aufgenommen wurde. Die auf den Gegenstand 12 abgesendete Wellenfront wurde durch gleichzeitiges Einschalten sämtlicher Sendeelemente erzeugt.

Die einzelnen Empfangselemente EL1 - ELN sind über die horizontale Achse aufgetragen, wobei die von den einzelnen Empfangselementen empfangenen Signale entsprechend ihrer Laufzeit, die über eine vertikale Achse aufgetragen ist, in vertikaler Richtung nacheinander dargestellt sind.

Die Intensität der dargestellten Signale wird über ihre Helligkeit definiert. Aus dem B-Scan gemäß Fig. 2 ist zu erkennen, dass unterschiedliche Strukturen des Gegenstandes unterschiedliche Signalmuster erzeugen. So erzeugt die Oberfläche des Gegenstandes 12 Oberflächenechos OE, welche in Fig. 2 als schräg verlaufende durchgehende Linien dargestellt sind. Die den einzelnen Empfangselementen EL1 - ELN zugeordneten Fehlerechos FE1 - FE12, sind als horizontale Linien dargestellt So werden beispielsweise von einem Empfangselement ELX die Fehlerechos FE1 bis FE4, und von weiteren Empfangselementen ELX1, ELX2 die Fehlerechos FE5 bis FE8 bzw. die Fehlerechos FE 9. bis FE 12 dargestellt. Im oberen linken Bereich des B-Scans sind Interferenzechos IE erkennbar, die aufgrund von Interferenzen zwischen Wellenfronten der einzelnen Sendeelemente des Phase Array Transducers entstehen.

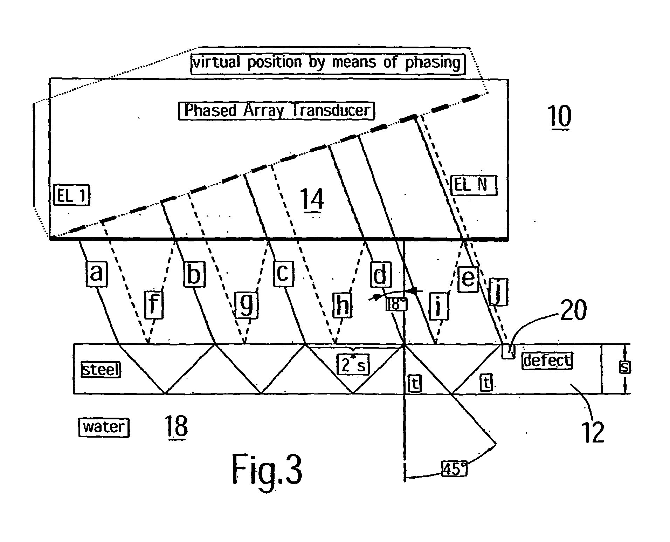

Der in Fig. 2 dargestellte B-Scan zeigt weiter, dass Fehlerechos mehrerer Empfangselemente, wie beispielsweise die Fehlerechos FE2, FE5 und FE3, FE6, FE9 sowie FE4, FE7 und FE10, zu jeweils gleichen Laufzeiten empfangen werden. Die gleichen Laufzeiten beispielsweise der Fehlerechos FE2 und FE5 sowie Fehlerechos FE3 und FE6 sollen anhand der Fig. 3 erläutert werden.

In Fig. 3 ist der Aufbau gemäß Fig. 1 dargestellt, wobei Signalwege ä bis i rein schematisch dargestellt sind. Die Dicke des Stahlbleches ist mit s bezeichnet und der Strahlengang innerhalb des Gegenstandes 12 mit t.

Es zeigt sich, dass sich die Laufzeit des Fehlerechos FE2 aus den Abschnitten d + 2t + e und die Laufzeit des Fehlerechos FE5 aus den Abschnitten bzw. Laufzeiten e + 2t + d jeweils zu einer identischen Laufzeit zusammensetzten. Ebenfalls sind die Laufzeiten des Fehlerechos FE3 und des Fehlerechos FE6 identisch, mit der Anmerkung, dass diese in unterschiedlichen Empfangselementen empfangen werden.

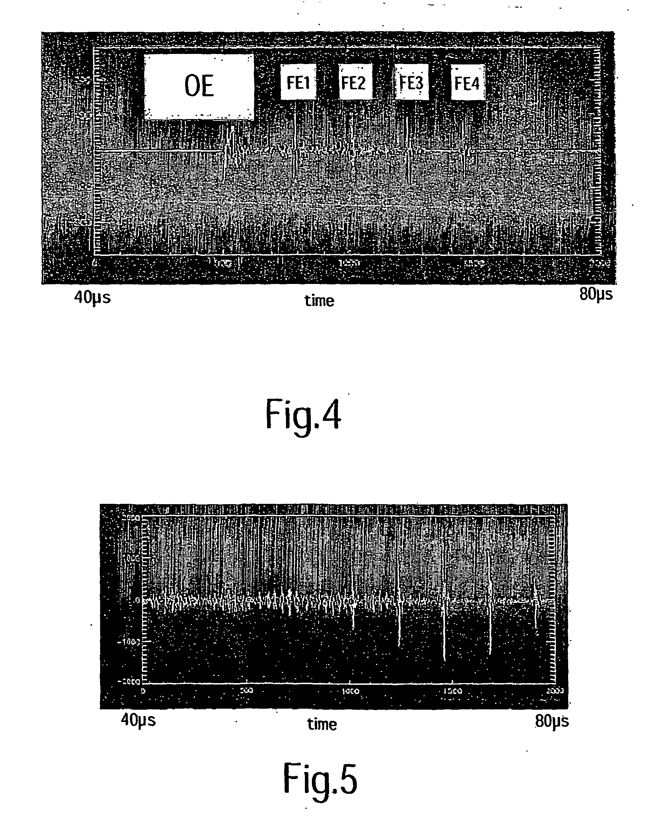

Die von einem Empfangselement ELX empfangenen Signale können ebenfalls in ihrer Amplitude über die Zeit dargestellt werden. Eine entsprechende Darstellung (A-Scan) ist in Fig. 4 gezeigt. Hierbei sind die einzelnen Echos OE, FE1 bis FE4 als Amplitudenausschläge zu unterschiedlichen Laufzeiten dargestellt. Gemäß dem erfindungsgemäßen Verfahren werden die Amplitudenwerte der zu gleichen Laufzeiten empfangenen Signale beispielsweise FE2 und FE5, FE3, FE6, FE9, bzw. FE4, FE7 und FE10 entlang ihrer Laufzeit addiert, wobei das in Fig. 5 über die Zeit dargestellte Signal erhalten wird, welches eine Information über die Feldstelle 20 in dem Gegenstand 12 sehr deutlich durch Amplitudenerhöhung im Bereich einer Größenordnung kennzeichnet.

Da die von verschiedenen Elementen ELX, ELX1 bzw. ELX2 empfangenen Fehlerechos die gleiche Laufzeit aufweisen, addieren sich die Amplitudenwerte, so dass das Summensignal steigt. Da die in den A-Scans gemäß Fig. 4 enthaltenen Rauschsignale sich gegenseitig stochastisch auslöschen, wird das Signal-Rausch-Verhältnis verbessert.

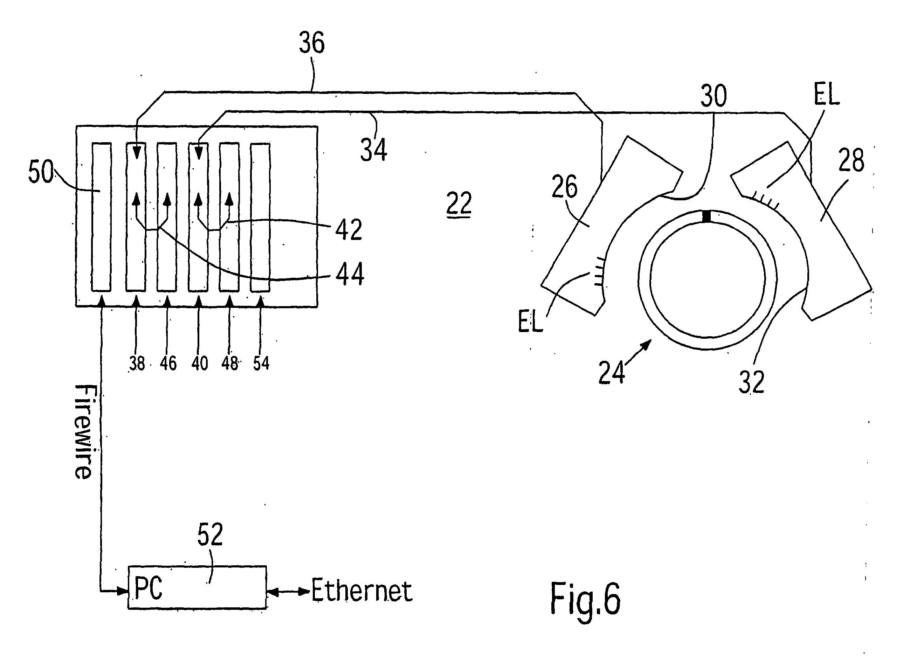

Fig. 6 zeigt einen Messaufbau 22 zur zerstörungsfreien Prüfung einer Rohrwandung 24 mittels entlang des Umfangs des Rohres angeordneter Prüfköpfe 26, 28, die eine an die Oberfläche des Rohres 24 angepasste, gekrümmte Oberfläche 30, 32, aufweisen, auf denen die Sende-/Empfangselemente EL1 bis ELN angeordnet sind, wobei N beispielsweise 128 beträgt. Jedes Sende-/Empfangselement EL1-ELN kann sowohl als Sender als auch als Empfänger geschaltet werden. Die räumliche Ausdehnung eines Elementes wird an die verwendete Ultraschall-Frequenz f angepasst, welche im Bereich zwischen 0,2 MHz ≤ f ≤ 20MHz,vorzugsweise f= 6 MHzw liegt.

Die Prüfköpfe 26, 28, die auch als Phased Array Transducer bezeichnet werden, sind über Datenleitungen 34, 36 jeweils mit einer ersten Signalverarbeitungseinheit 38, 40 verbunden, welche die Sende-/Empfangselemente EL der Prüfköpfe 26, 28 ansteuert und die empfangenen Signale verstärkt und digitalisiert. Die Signalverarbeitungseinheiten 38, 40 sind jeweils über eine Datenverbindung 42, 44, die beispielsweise als FSL (Fast Serial Link) ausgebildet ist, mit jeweils einer Signalauswertungseinheit 46, 48, verbunden. Des Weiteren umfasst die Schaltungsanordnung eine Schnittstelle 50 zur Verbindung mit einem externen Personal Computer 52 sowie eine Mikroprozessoreinheit 54 zur Verarbeitung und Auswertung (Sortieren, Markieren) der Informationen der Einheiten 46 und 48.

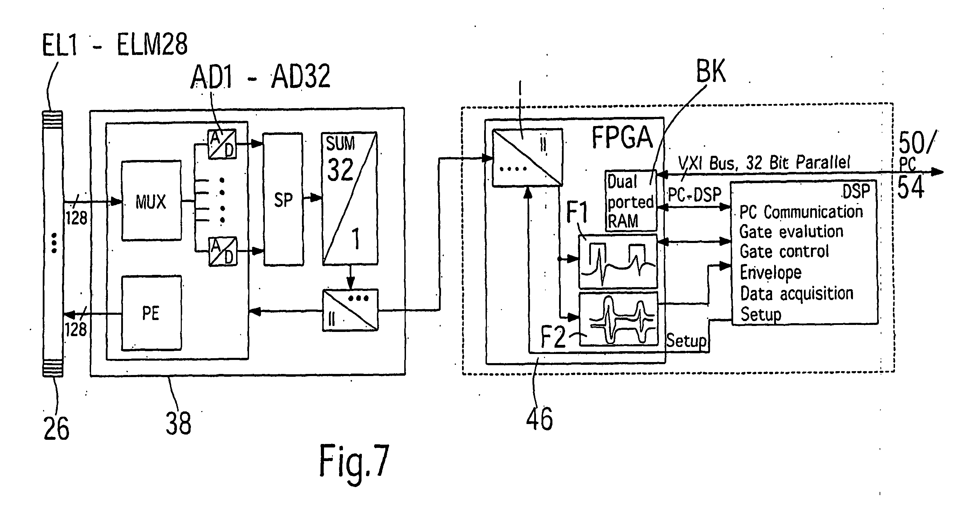

Fig. 7 zeigt ein detailliertes Blockschaltbild der Komponenten der Schaltungsanordnung 22 gemäß Fig. 6. Die Signalverarbeitungseinheit 38 umfasst eine Pulseinheit PE zur Ansteuerung der Sende-/Empfangselemente EL1 - EL128, die im vorliegenden Beispiel 128 Elemente umfassen. Dabei werden die Sendeelemente nach festem Zeitmuster (Phasing) angesteuert. Anschließend werden die Empfangselemente auf gleichzeitigen Empfang geschaltet und über einen Multiplexer MUX. werden sodann die empfangenen Analogsignale entsprechenden A/D-Wandlern AD, im vorliegenden Beispiel jeweils auf 32 A/D-Wandler geleitet. Durch die A/D-Wandler AD werden die empfangenen Analogsignale digitalisiert und in einem Speicherelement SP als sogenanntes A-Bild bzw. A-Scan hinterlegt. Die in dem Speicherelement SP hinterlegten beispielsweise 32 A - Scans gemäß Fig. 4 werden sodann in einem Summierelement SUM erfindungsgemäß durch phasenstarre Addition der Amplitudenwerte zu dem in Fig. 5 dargestellten A-Scan entlang ihrer Laufzeit aufaddiert, wobei sich der Vorteil ergibt, dass sich die Amplitudenmaxima addieren, wodurch die Fehlstelle deutlich hervorgehoben wird und Rauschsignale gegenseitig aufgehoben werden.

Am Ausgang des Summierelementes SUM steht somit das in Fig. 5 dargestellte Signal als A-Scan zur Verfügung, das über ein Interface 1 der weiteren Signalauswertungseinrichtung 46 zugeführt wird, die ebenfalls ein Interface I aufweist. In der Signalauswertungseinrichtung 46 wird der B-Scan sodann ein oder mehreren Auswertebausteinen F1, F2 zur weiteren Signalverarbeitung zugeführt. Die Steuerung der einzelnen Komponenten der Schaltungseinheiten 38, 46 erfolgt über einen digitalen Signalprozessor DSP, welcher über einen Buskoppler BK und die Schnittstelle 50 mit dem Personal Computer 52 sowie mit der Mikroprozessoreinheit 54 verbunden ist. Die Ergebnisse der Signalverarbeitung werden auf einem Bildschirm dargestellt.

Um eine Datenreduktion vor Abspeicherung der an den A/D-Wandlern AD1 - AD32 anliegenden Signale zu erreichen, kann vorgesehen sein, dass diese vor Speicherung gefiltert, vorzugsweise Wavelet-gefiltert werden.

Das bisher beschriebene Verfahren dient allgemein zur schnellen und effektiven Erkennung von Fehlstellen in einem Gegenstand. Da bei der Summation der Amplitudenwerte entlang gleicher Laufzeiten die Ortsinfonnation der Fehlerstelle verloren geht, sind weitere Maßnahmen erforderlich, um eine Erkennung eines Außenfehlers zu ermöglichen. Hierzu wird vorgeschlagen, dass die von einem Außenfehler des Gegenstandes bei der Beschallung mit einer Ultraschallwelle reflektierten Punktwellensignale ausgewertet werden.

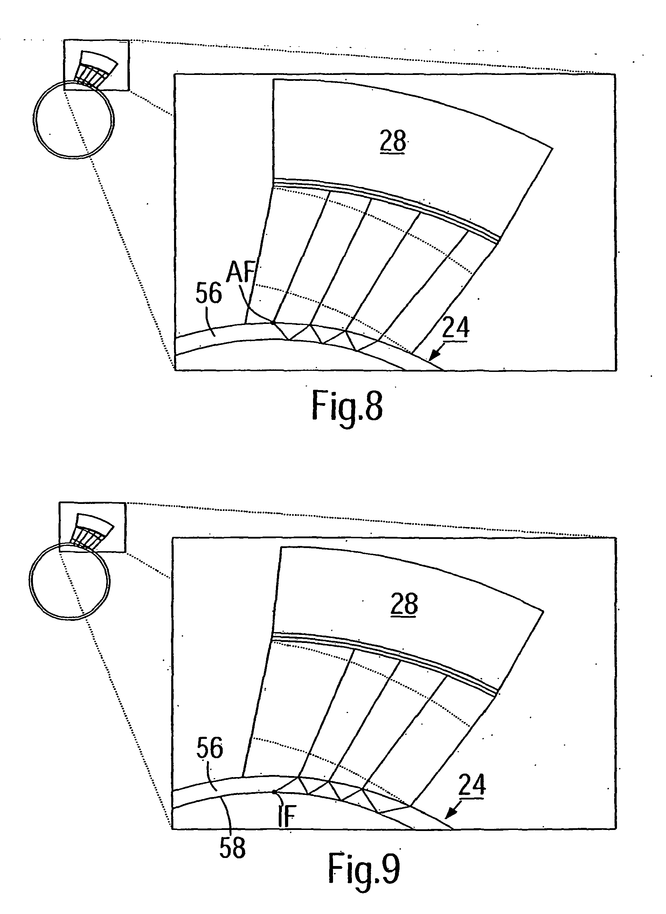

Fig. 8 zeigt rein schematisch die Strahlenwege bei einer Beschallung des Rohres 24, welches eine Fehlstelle AF in einer äußeren Oberfläche 56 aufweist Fig. 9 zeigt die Strahlenwege bei Beschallung des Rohres 24, welches eine Fehlstelle IF an einer inneren Oberfläche 58 aufweist. Die von dem Außenfehler AF in Fig. 8 ausgehende Punktwellensignale sind ebenfalls in dem in Fig. 2 dargestellten B-Scan erkennbar, nämlich als Fehlerechos FE1 bis FE4 und deren Interferenzmuster. Zur Erkennung eines Außenfehlers kann eine "schräge" Addition, d. h. nicht entlang einer bestimmten Laufzeit, sondern senkrecht oder in etwa senkrecht zu den Interferenzmustern der empfangenen Amplitudenwerte durchgeführt werden, so dass sich in dieser Richtung ein Amplitudenmaxima ergibt, das einen Hinweis auf einen Außenfehler AF enthält.

Um eine Aussage darüber zu treffen, ob ein Innen- oder Außenfehler vorliegt, erfolgt durch ein Koinzidenzverfahren beispielsweise in einem der Auswertebausteine F1, F2 eine Auswertung des Summensignals über die Amplitudenwerte-gleicher Laufzeiten mit dem Summensignal der Amplitudenwerte in Richtung senkrecht oder in etwa senkrecht zu den Interferenzmustern der von den Punktwellensignalen empfangenen Amplitudenwerte, wobei dann ein Außenfehler vorliegt, wenn beide Signale eine Fehlerstelle zeigen. Sollte jedoch bei der phasenstarren Addition der Amplitudenwerte entlang einer Laufzeit eine Fehlerstelle erkannt werden, ohne dass jedoch eine Fehlerstelle bei der Addition der Amplitudenwerte senkrecht oder in etwa senkrecht zu den Interferenzmustern ermittelt wird, so liegt ein Innenfehler vor.

Als besondere Vorteile des erfindungsgemäßen Verfahrens sind zu erwähnen, dass die zur Auswertung der Fehlstellen erhaltenen Signale ein gegenüber dem Stand der Technik verbessertes Signal-Rausch-Verhältnis aufweisen und daher besser automatisch ausgewertet werden können. Durch die flächige Beschallung des zu prüfenden Gegenstandes aufgrund der Verwendung eines Prüfkopfes mit Phased Array - Technik, d. h. durch gleichzeitiges Aussenden einer Wellenfront und gleichzeitiges Einlesen der Signale wird ein erheblicher Zeitvorteil im Vergleich zu aus dem Stand der Technik bekannten Verfahren mit sequenzieller Technik erreicht.

Auch erfolgt durch die phasenstarre Addition eine Datenreduktion, so dass die anschlie-ßende Signalverarbeitung ebenfalls beschleunigt und vereinfacht wird.

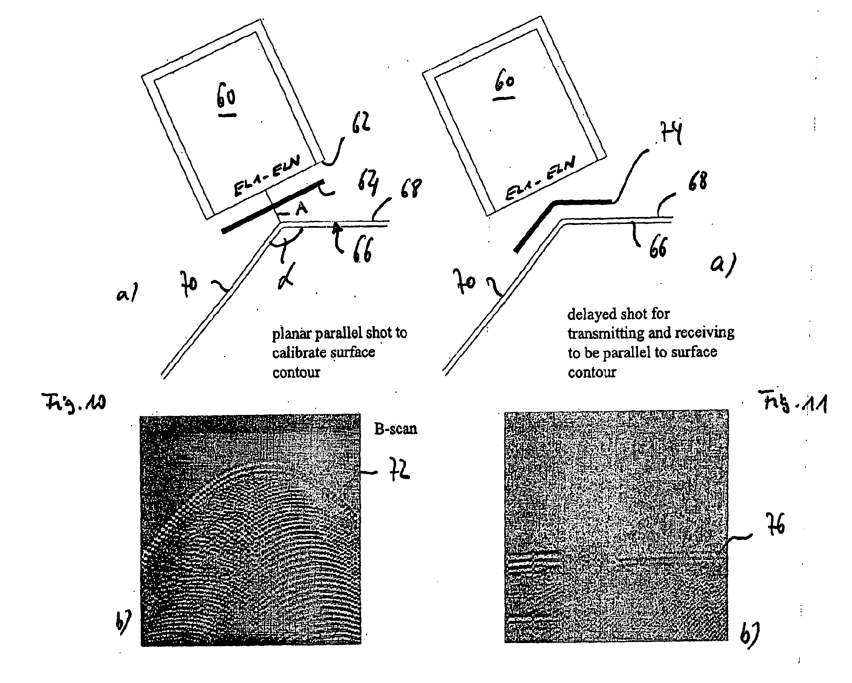

Fig. 10a zeigt eine schematische Darstellung eines Prüfkopfes 60, der in seinem Aufbau dem weiter oben beschriebenen Prüfkopf 14 entspricht. Von dem Prüfkopf 60 wird eine parallel oder im Wesentlichen parallel zu einer von den Sendeelementen aufgespannten Ebene 62 verlaufende Wellenfront 64 ausgesendet. Die Wellenfront 64 trifft auf einen eine Kontur wie Kante, Biegung oder Krümmung aufweisenden Gegenstand 66 auf, der im vorliegenden Ausführungsbeispiel eine erste Fläche 68 aufweist, die gegenüber einer zweiten Fläche 70 in einem Winkel α verläuft.

Zur Bestimmung der Kontur des zu prüfenden Gegenstandes 60 werden die von den Oberflächen 68, 70 reflektierten Wellen empfangen, digitalisiert und in einem Speicherelement SP entsprechend der Schaltungsanordnung gemäß Fig. 7 gespeichert. Auf der Grundlage eines definierten Abstandes A von einem Referenzpunkt des Gegenstandes 66 und den ermittelten und gespeicherten Laufzeiten der Signale kann sodann die Kontur des Gegenstandes 66 errechnet werden. Ein entsprechendes Interferenzmuster (B-Scan) 72, welches im Wesentlichen der Kontur des Gegenstandes 66 entspricht, ist in Fig. 10b dargestellt.

Ausgehend von der berechneten Kontur des Gegenstandes 66 werden sodann bei dem eigentlichen Messvorgang die Sendeelemente EL1-ELN derart zeitverzögert angesteuert, dass eine von dem Prüfkopf 60 ausgehende Wellenfront 74 parallel oder im Wesentlichen parallel zu der Kontur, d. h. den Oberflächen 68, 70 des zu prüfenden Gegenstandes 60 verläuft. Die von dem Gegenstand 66 reflektierten Wellen werden ebenfalls zeitversetzt empfangen und aus den so empfangenen Signalen ein in Fig. 11b dargestelltes Interferenzmuster 76 erzeugt, dessen Wellenfront in einer Ebene liegt.

Aus den Daten dieses Interferenzmusters können Fehlstellen auf einfache Weise entdeckt werden.

Um eine Anpassung an eine sich ändernde Kontur des Gegenstandes zu ermöglichen ist vorgesehen, dass das empfangene Interferenzmuster 76 mit einem Sollmuster verglichen wird und dass bei Abweichung des empfangenen Interferenzmusters 76 zu dem Sollmuster eine erneute Ermittlung der aktuellen Kontur des Gegenstandes 66 erfolgt, indem - auch während eines Messvorgangs - ausgehend von dem Prüfkopf 60 eine beispielsweise planare Wellenfront 64 auf den Gegenstand 66 abgesendet wird, um eine erneute Konturmessung vorzunehmen, die sodann der weiteren Messung zu Grunde gelegt wird.

## Patentansprüche

1. Verfahren zur Verarbeitung von Signalen, die bei der zerstörungsfreien Prüfung von Gegenständen (12, 24) wie Rohren oder Blechen durch Reflexion von Ultraschallwellen an Fehlstellen (20, AF) der Struktur des Gegenstandes (12, 24) erzeugt werden, umfassend die Verfahrensschritte:
- Aussenden einer kompletten Wellenfront auf zumindest einen zu prüfenden Abschnitt des Gegenstandes (12, 24) mittels einer Vielzahl unabhängiger Sendeelemente (EL1 - ELN),
- Empfangen einer von der Struktur des Gegenstandes reflektierten Welle mittels einer Vielzahl voneinander unabhängiger Empfangselemente (EL1 - ELN),
- Digitalisieren der von den Empfangselementen (ELI - ELN) empfangenen Signalen,
- Speichern der digitalisierten Signale nach Amplitude und Laufzeit in einem Speicherelement (SP),
- Erkonnen der Fehtstellen (20) durch eine phasenstarre Addition der gespeicherten Amplitudenwerte längs einer Laufzeit.

2. Verfahren nach Anspruch 1,
**dadurch gekennzeichnet,**
**dass** zur Erkennung eines auf einer äußeren dem Prüfkopf (14, 26, 28) zugewandten Oberfläche (56) des Gegenstandes (12, 24) liegenden Fehlstelle (Außenfehler) (20, AF) die von der Fehlstelle (20, AF) ausgehenden Punktwellensignale ausgewertet werden.

3. Verfahren nach Anspruch 1 oder 2,
**dadurch gekennzeichnet,**
**dass** die Erkennung der auf der äußeren, d. h. dem Prüfkopf (14, 26, 28) zugewandten Oberfläche (56) des Gegenstandes (12, 24), liegenden Fehlstelle (AF) durch eine Addition derjenigen in dem Speicherbaustein (SP) hinterlegten Amplitudenwerte erfolgt, welche von von dem Außenfehler (AF) ausgehenden Punktwellensignale abgeleitet werden.

4. Verfahren nach Anspruch 3,
**dadurch gekennzeichnet,**
**dass** die Addition senkrecht oder im Wesentlichen senkrecht zu lnterferenzmustern der empfangenen Amplitudenwerte der Punktwellen der Außenfehler (AF) verläuft.

5. Verfahren nach Anspruch 4,
**dadurch gekennzeichnet,**
**dass** die Erkennung der Außenfehler (AF) durch Vergleich des bei der phasenstarren Addition der gespeicherten Amplitudenwerte längs einer Laufzeit ermittelten Summensignals mit dem bei der Addition der Amplitudenwerte der Interferenzmuster ermittelten Summensignal erfolgt, wobei ein Außenfehler (AF) vorliegt, wenn beide Summensignale eine Fehlstelle anzeigen (Koinzidenzverfahren).

6. Verfahren nach zumindest einem der vorhergehenden Ansprüche,
**dadurch gekennzeichnet,**
**dass** die einzelnen Sendeetemente (EL1 - ELN) zur Einstellung eines an die Messbedingungen wie Fehlerart, Fehlergröße, Materialart, Materialform angepassten Einstrahlwinkels a zeitverzögert angesteuert werden (phasing).

7. Verfahren nach zumindest einem der vorhergehenden Ansprüche,
**dadurch gekennzeichnet,**
**dass** zur Bestimmung des Fehlerortes eine laufzeitabhängige Amplitudenkorrektur des bei der Addition ermittelten Summensignals durchgeführt wird.

8. Verfahren nach zumindest einem der vorhergehenden Ansprüche,
**dadurch gekennzeichnet,**
**dass** die empfangenen Signale nach ihrer Digitalisierung zur Dateneduktion gefiltert, vorzugsweise wavelet-gefiltert werden.

9. Verfahren nach zumindest einem der vorhergehenden Ansprüche,
**dadurch gekennzeichnet,**
**dass** die Kontur einer Oberfläche (68, 70) des zu prüfenden Gegenstandes (12, 24, 66) erfasst und abgespeichert wird,
**dass** die unabhängigen Sendeelemente (EL1 - ELN) derart zeitverzögert angesteuert werden, dass die ausgehende Wellenfront (74) parallel oder in etwa parallel zu der Kontur der Oberfläche (68, 70) des Gegenstandes (66) verläuft und
**dass** die von dem Gegenstand (66) reflektierten Wellen zeitverzögert empfangen werden und ein im Wesentlichen planares Interferenzmuster (76) erzeugen.

10. Verfahren zur zerstörungsfreien Prüfung einer Kontur eines Gegenstandes (12, 24, 66) durch Verarbeitung von Signalwellen, die durch Reflexion von Ultraschallwellen an Fehlstellen (20, AF) der Struktur des Gegenstandes (12, 24) erzeugt werden, umfassend die Verfahrensschritte:
- Aussenden einer kompletten Wellenfront auf die zumindest eine zu prüfende Kontur des Gegenstandes (12, 24, 66) mittels einer Vielzahl unabhängiger Sendeelemente (EL1 - ELN),
- Empfangen einer von der Struktur des Gegenstandes reflektierten Welle mittels einer Vielzahl voneinander unabhängiger Empfangselemente (EL1 - ELN),
- Digitalisieren der von den Empfangselementen (EL1 - ELN) empfangenen Signalen,
- Speichern der digitalisierten Signale nach Amplitude und Laufzeit in einem Speicherelement (SP),
**dadurch gekennzeichnet,**
**dass** die Kontur einer Oberfläche (68, 70) des zu prüfenden Gegenstandes (12, 24, 66) erfasst und abgespeichert wird,
**dass** die unabhängigen Sendeelemente (EL1 - ELN) derart zeitverzögert angesteuert werden, dass die ausgehende Wellenfront (74) parallel oder in etwa parallel zu der Kontur der Oberfläche (68, 70) des Gegenstandes (66) verläuft und
**dass** die von dem Gegenstand (66) reflektierten Wellen zeitverzögert empfangen werden und ein im Wesentlichen planares Interferenzmuster (76) erzeugen.

11. Verfahren nach Anspruch 10,
**dadurch gekennzeichnet,**
**dass** die Kontur des Gegenstandes (66) ermittelt wird, indem eine beispielsweise planare Wellenfront (64) auf die zu prüfende Kontur ausgesendet wird,
**dass** die von der Kontur des Gegenstandes (66) reflektierten Wellen mittels der Vielzahl voneinander unabhängigen Empfangselemente (EL1- ELN) empfangen, digitalisiert und die digitalisierten Signale zumindest nach Laufzeit in dem Speicherelement (SP) gespeichert werden,
**dass** aus einem definierten Abstand (A) des Prüfkopfes zum Gegenstand (66) und den unterschiedlichen Laufzeiten der empfangenen Signale die Kontur des Gegenstandes berechnet wird.

12. Verfahren nach zumindest einem der Ansprüche 9 bis 11,
**dadurch gekennzeichnet,**
**dass** ein aus den empfangenen Signalen ermitteltes Interferenzmuster (76) mit einem Sollmuster verglichen wird und dass bei einer Abweichung von dem Sollmuster eine erneute Konturmessung erfolgt.

13. Verfahren nach zumindest einem der Ansprüche 9 bis 12.
**dadurch gekennzeichnet,**
**dass** eine Nachbestimmung der Kontur des zu prüfenden Gegenstandes während eines Messvorgangs erfolgt.

14. Verfahren nach zumindest einem der Ansprüche-9 bis 13,
**dadurch gekennzeichnet,**
**dass** die parallel oder im Wesentlichen parallel zu der Kontur des zu prüfenden Gegenstandes (66) verlaufende Wellenfront (74) durch zeitverzögertes Aussenden von Schallimpulsen erzeugt wird.

15. Verfahren nach zumindest einem der Ansprüche 9 bis 14,
**dadurch gekennzeichnet,**
**dass** das empfangene planare Interferenzmuster (76) durch zeitversetztes Ansteuern der voneinander unabhängigen Empfangselemente (EL1 - ELN) in Abhängigkeit von den in dem Speicher hinterlegten Konturwerten empfangen wird.

16. Schaltungsanordnung (22) zur Verarbeitung von Signalen, die bei der zerstörungsfreien Prüfung von Gegenständen wie Rohren, Blechen durch Reflexion von Ultraschallwellen an Fehlstellen der Struktur des Gegenstandes erzeugt werden, umfassend eine Signalerfassungseinheit (38) mit einem Pulserzeuger (PE) zum Ansteuern von Sende-/Empfangselemente (EL1-ELN) zur Aussendung einer kompletten Wellenfront und zur Umschaltung der Sende-/Empfangselemente (EL1 - EL2) auf Empfang, wobei ein Multiplexer (MUX) vorgesehen ist, über den an den Empfangselementen anliegende Analogsignale A/D-Wandlern (AD1 - ADN) zuleitbar sind, deren Ausgänge mit einem Speicherelement (SP) zur Speicherung digitalisierter Signale verbunden sind, wobei
die digitalisierten Signale in dem Speicherelement (SP) bezüglich ihrer Signalamplitude und Laufzeit gespeichert sind und dass dem Speicherelement (SP) ein Summierelement (SUM) zur phasenstarren Addition der in dem Speicherelement (SP) hinterlegten Amplitudenwerte nachgeschaltet ist und wobei an einem Ausgang der Summenschaltung (SUM) ein bezüglich der FehlStelle (20) auswertbares Signal anliegt.

17. Schaltungsanordnung nach Anspruch 16,
**dadurch gekennzeichnet,**
**dass** der Ausgang des Summierelementes (SUM) vorzugsweise über ein Interface I mit einer Auswerteschaltung (46) verbunden ist, in der ein Ausgang des Summierelementes (SUM) mit einer Signalverarbeitungsschaltung (46) verbunden ist, welches ein oder mehrere Auswertebausteine (F1, F2) zur weiteren Bewertung und Auswertung des am Ausgang des Summierelementes (SUM) anliegenden Signals aufweist.

18. Schaltungsanordnung nach Anspruch 16 oder 17,
**dadurch gekennzeichnet,**
**dass** die Auswertebausteine (F1, F2) eine Koinzidenzschaltung zum Vergleich der Summensignale bei phasenstarrer Addition der Amplitudenweile längs einer Laufzeit mit den Summensignalen bei Addition der Amplitudenwerte der Punktwellensignale von Außenfehlern aufweisen.

19. Schaltungsanordnung nach Anspruch 16 bis 18,
**dadurch gekennzeichnet,**
**dass** der Prüfkopf (14, 26, 28) als Phased Array Transducer ausgebildet ist.

20. Schaltungsanordnung nach Anspruch 16 bis 19,
**dadurch gekennzeichnet,**
**dass** die Sende-/Empfangselemente (EL1 - ELN) gleichzeitig oder phasenverschoben (phasing) ansteuerbar sind

21. Schaltungsanordnung nach Anspruch 16 bis 20,
**dadurch gekennzeichnet,**
**dass** die Sende-/Empfangselemente (EL1 - ELN) als eine Einheit ausgebildet sind.

22. Schaltungsanordnung nach Anspruch 16 bis 19,
**dadurch gekennzeichnet,**
**dass** die Sendeelemente und Empfangselemente als getrennte Einheiten ausgebildet sind.

## Claims

1. A method for processing signals which are generated during the non-destructive examination of objects (12, 24), e.g. pipes or sheet metal, by reflection of ultrasonic waves at defect locations (20, AF) of the structure of the object (12, 24), comprising the steps of:
- emission of a complete wave front onto at least one section of the object (12, 24) to be examined by means of a plurality of independent transmitter elements (EL1 - ELN),
- reception of a wave reflected by the structure of the object by means of a plurality of receiver elements (EL1 - ELN) which are independent of one another,
- digitalizing the signals received from the receiver elements (EL1 - ELN),
- storage of the digitalized signals according to amplitude and propagation time in a storage element (SP),
- detection of the defect locations (20) by a phase-locked addition of the stored amplitude values along a propagation time.

2. The method according to claim 1,
**characterized in**
**that** to detect a defect location (outer defect) (20, AF) on an outer surface (54) of the object (12, 24) facing the probe (14, 26, 28), the point-wave signals passing from the defect location (20, AF) are evaluated.

3. The method according to claim 1 or 2,
**characterized in**
**that** the detection of the defect location (AF) on the outer surface (56) of the object (12, 24), i.e. the surface facing the probe (14, 26, 28), is effected by an addition of those amplitude values stored in the storage module (SP) which are derived from the point-wave signals proceeding from the outer defect (AF).

4. The method according claim 3,
**characterized in**
**that** the addition extends perpendicular or essentially perpendicular to the interference pattern of the received amplitude values of the point waves of the outer defects (AF).

5. The method according claim 4,
**characterized in**
**that** the detection of the outer defect (AF) is effected by a comparison of the sum signal determined during the phase-locked addition of the stored amplitude values along a propagation time with the sum signal determined during the addition of the amplitude values of the interference pattern, an outer defect (AF) being present if both sum signals indicate a defect location (coincidence method).

6. The method according to at least one of the preceding claims,
**characterized in**
**that** the individual transmitter elements (EL1 - ELN) are controlled in a time-delayed manner (phasing) to set a single-beam angle α adapted to the test conditions, e.g. type of defect, size of defect, type of material, material form.

7. The method according to at least one of the preceding claims,
**characterized in**
**that** a propagation time dependent amplitude correction of the sum signal determined during the addition is performed to identify the location of the defect.

8. The method according to at least one of the preceding claims,
**characterized in**
**that** the received signals are filtered, preferably wavelet filtered, after their digitalization for the data reduction.

9. The method according to at least one of the preceding claims,
**characterized in**
**that** the contour of a surface (68, 70) of the object (12, 24, 66) to be examined is recorded and stored,
**that** the independent transmitter elements (EL1 - ELN) are controlled in a time-delayed manner in such a way that the emanating wave front (74) extends parallel or approximately parallel to the contour of the surface (68, 70) of the object (66) and that the waves reflected by the object (66) are received in a time-delayed manner and generate an essentially planar interference pattern (76).

10. A method for the non-destructive examination of a contour of an object (12, 24, 66) by processing signal waves which are generated by reflection of ultrasonic waves at defect locations (20, AF) of the structure of the object (12, 24), comprising the steps of:
- emission of a complete wave front onto the at least one contour of the object (12, 24, 66) to be examined by means of a plurality of independent transmitter elements (EL1 - ELN),
- reception of a wave reflected by the structure of the object by means of a plurality of receiver elements (EL1 - ELN) which are independent of one another,
- digitalizing the signals received from the receiver elements (EL1 - ELN),
- storing the digitalized signals according to amplitude and propagation time in a storage element (SP),
**characterized in**
**that** the contour of a surface (68, 70) of the object (12, 24, 66) to be examined is recorded and stored,
**that** the independent transmitter elements (EL1 - ELN) are controlled in a time-delayed manner in such a way that the emanating wave front (74) extends parallel or approximately parallel to the contour of the surface (68, 70) of the object (66) and that the waves reflected by the object (66) are received in a time-delayed manner and generate a substantially planar interference pattern (76).

11. The method according claim 10,
**characterized in**
**that** the contour of the object (66) is determined by emitting, for example, a planar wave front (64) onto the contour to be examined,
**that** the waves reflected by the contour of the object (66) are received, digitalized by means of the plurality of receiver elements (EL1 - ELN) which are independent of one another and the digitalized signals are stored in the storage element (SP) at least according to propagation time,
**that** the contour of the object is computed from a defined distance (A) of the probe to the object (66) and the different propagation times of the received signals.

12. The method according to at least one of claims 9 to 11,
**characterized in**
**that** an interference pattern (76) determined from the received signals is compared with a desired pattern and that, when there is a deviation from the desired pattern, a renewed contour measurement is performed.

13. The method according to at least one of claims 9 to 12,
**characterized in**
**that** a subsequent determination of the contour of the object to be examined occurs during an measuring process.

14. The method according to at least one of claims 9 to 13,
**characterized in**
**that** the wave front (74) extending parallel or essentially parallel to the contour of the object (66) to be examined is generated by time-delayed emission of sound pulses.

15. The method according to at least one of claims 9 to 14,
**characterized in**
**that** the received planar interference pattern (76) is received by time-delayed actuation of the receiver elements (EL1 - ELN) which are independent of one another, in dependence on the contour values stored in the storage unit.

16. A circuit arrangement (22) for processing signals which are generated during the non-destructive examination of objects, e.g. pipes, sheet metal, by reflection of ultrasonic waves at defect locations of the structure of the object, comprising a signal recording unit (38) with a pulse generator (PE) for actuating transmitter/receiver elements (EL1 - ELN) for emitting a complete wave front and for switching the transmitter/receiver elements (EL1 - EL2) to receive, wherein a multiplexer (MUX) is provided via which analog signals applied to the receiver elements can be transmitted to A/D converters (AD1 - ADN), the outputs of which are connected to a storage element (SP) for storing digitalized signals, whereby the digitalized signals are stored in the storage element (SP) with respect to their signal amplitude and propagation time and a summing element (SUM) for the phase-locked addition of the amplitude values stored in the storage element (SP) is arranged downstream the storage element (SP) and whereby a signal which can be evaluated with respect to the defect location (20) is applied to an output of the summing circuit (SUM).

17. The circuit arrangement according to claim 16,
**characterized in**
**that** the output of the summing element (SUM) is preferably connected via an interface I with an evaluation circuit (46) in which an output of the summing element (SUM) is connected with a signal processing circuit (46) which has one or more evaluation modules (F1, F2) for the further assessment and evaluation of the signal applied to the output of the summing element (SUM).

18. The circuit arrangement according to claim 16 or 17,
**characterized in**
**that** the evaluation modules (F1, F2) have a coincidence circuit for comparing the sum signals during a phase-locked addition of the amplitude values along a propagation time with the sum signals during addition of the amplitude values of the point-wave signals of outer defects.

19. The circuit arrangement according to claim 16 to 18,
**characterized in**
**that** the probe (14, 26, 28) is configured as a Phased Array Transducer.

20. The circuit arrangement according to claim 16 to 19,
**characterized in**
**that** the transmitter/receiver elements (EL1 - ELN) can be controlled simultaneously or in a phase-shifted manner (phasing).

21. The circuit arrangement according to claim 16 to 20,
**characterized in**
**that** the transmitter/receiver elements (EL1 - ELN) are made as a unit.

22. The circuit arrangement according to claim 16 to 19,
**characterized in**
**that** the transmitter elements and receiver elements are made as separate units.

## Revendications

1. Procédé de traitement de signaux qui, dans le contrôle non destructif d'objets (12, 14) tels que tubes ou tôles, sont produits par la réflexion d'ondes ultrasonores sur les emplacements défectueux (20, AF) de la structure de l'objet, comprenant les étapes consistant à :
- émettre un front complet d'ondes sur au moins un segment à contrôler de l'objet (12, 24) au moyen d'une pluralité d'éléments émetteurs indépendants (EL1- ELN),
- recevoir une onde réfléchie par la structure de l'objet, au moyen d'une pluralité d'éléments récepteurs indépendants les uns des autres (EL1 - ELN),
- numériser les signaux reçus par les éléments récepteurs ((),
- enregistrer les signaux numérisés dans un élément de mémoire (SP) selon leur amplitude et leur temps de parcours, et
- identifier les emplacements défectueux (20) par une addition, en verrouillage de phases, des valeurs d'amplitude enregistrées le long d'un temps de parcours.

2. Procédé selon la revendication 1,
**caractérisé en ce que**
pour l'identification d'un emplacement défectueux (défaut extérieur) (20, AF) situé sur une surface extérieure (56) de l'objet (12, 24) tournée vers la tête de contrôle (14, 26, 28), on exploite les signaux ponctuels d'onde partant de l'emplacement défectueux (20, AF).

3. Procédé selon la revendication 1 ou 2,
**caractérisé en ce que**
l'identification de l'emplacement défectueux (AF) situé sur la surface (56) de l'objet (12, 24) tournée vers la tête de contrôle (14, 26, 28) est effectuée par une addition des valeurs d'amplitude déposées dans le composant de mémoire (SP) qui sont déduites des signaux ponctuels d'onde partant du défaut extérieur (AF).

4. Procédé selon la revendication 3,
**caractérisé en ce que**
l'addition s'effectue perpendiculairement ou pour l'essentiel perpendiculairement aux figures d'interférence des valeurs d'amplitudes des ondes ponctuelles des défauts extérieurs (AF), telles qu'elles sont reçues.

5. Procédé selon la revendication 4,
**caractérisé en ce que**
l'idenfication des défauts extérieurs (AF) se fait en comparant le signal total obtenu par l'addition, en verrouillage de phases, des valeurs d'amplitude enregistrées le long d'un temps de parcours au le signal total obtenu par l'addition des valeurs d'amplitude des figures d'interférence, et il un défaut extérieur (AF) existe si les deux signaux totaux indiquent un emplacement défectueux (procédé par coïncidence).

6. Procédé selon au moins une des revendications précédentes,
**caractérisé en ce que**
les divers éléments émetteurs (EL1 - ELN) sont commandés avec temporisation (avec décalage de phase) pour le réglage d'un angle d'incidence α adapté aux conditions de mesure, telles que type de défaut, dimensions du défaut, type de matériau, forme du matériau.

7. Procédé selon au moins une des revendications précédentes,
**caractérisé en ce que**
pour déterminer l'emplacement défectueux, une correction d'amplitude en fonction de le temps de parcours est effectuée pendant l'addition des signaux totaux déterminés.

8. Procédé selon au moins une des revendications précédentes,
**caractérisé en ce que**
les signaux reçus sont filtrés, de préférence filtrés par ondelettes, après leur numérisation pour supprimer des données.

9. Procédé selon au moins une des revendications précédentes,
**caractérisé en ce que**
le contour d'une surface (68, 70) de l'objet à contrôler (12, 24, 66) est détecté et enregistré,
décalés les éléments émetteurs indépendants (EL1 - ELN) sont commandés avec temporisation de telle façon que le front d'ondes (74) émis s'étend parallèlement ou approximativement parallèlement au contour de la surface (68, 70) de l'objet (66) et que les ondes réfléchies par l'objet (66) sont reçues avec temporisation et produisent une figure d'interférence (76) sensiblement plane.

10. Procédé de contrôle non destructif d'un contour d'un objet (12, 24, 66) par traitement d'ondes de signaux qui sont produites par réflexion d'ondes ultrasonores sur des emplacements défectueux (20, AF) de la structure de l'objet (12, 24), comprenant les étapes consistant à :
- émettre un front complet d'ondes sur l'au moins un contour à contrôler de l'objet (12, 24, 66) au moyen d'une pluralité d'éléments émetteurs indépendants (EL1 - ELN),
- recevoir une onde réfléchie par la structure de l'objet, au moyen d'une pluralité d'éléments récepteurs indépendants les uns des autres (EL1 - ELN),
- numériser les signaux reçus des éléments récepteurs (EL1 - ELN),
- enregistrer les signaux numérisés selon l'amplitude et le temps de parcours dans un élément de mémoire (SP),
**caractérisé en ce que**
le contour d'une surface (68, 70) de l'objet à contrôler (12, 24, 66) est détecté et enregistré, et
décalés les éléments émetteurs indépendants (EL1 - ELN) sont commandés avec temporisation de telle façon que le front d'ondes (74) émis s'étend parallèlement ou approximativement parallèlement au contour de la surface (68, 70) de l'objet (66) et que les ondes réfléchies par l'objet (66) sont reçues avec temporisation et produisent une figure d'interférence (76) sensiblement plane.

11. Procédé selon la revendication 10,
**caractérisé en ce que**
le contour de l'objet (66) est déterminé en émettant un front d'ondes (64) par exemple plan sur le contour à contrôler,
les ondes réfléchies par le contour de l'objet (66) sont reçues au moyen de la pluralité d'éléments récepteurs indépendants les uns des autres (EL1 - ELN), numérisées et les signaux numérisés sont enregistrés dans l'élément de mémoire (SP) au moins selon leur temps de parcours, et
que le contour de l'objet est calculé à partir d'une distance définie (A) de la tête de contrôle par rapport à l'objet (66) et à partir des différents temps de parcours des signaux reçus.

12. Procédé selon au moins une des revendications 9 à 11,
**caractérisé en ce qu'**
une figure d'interférence (76) déterminée à partir des signaux reçus est comparée à une figure théorique, et une nouvelle mesure du contour est effectuée en cas d'écart par rapport à la figure théorique.

13. Procédé selon au moins une des revendications 9 à 12,
**caractérisé en ce qu'**
une nouvelle détermination du contour de l'objet à contrôler est effectuée pendant une opération de mesure.

14. Procédé selon au moins une des revendications 9 à 13,
**caractérisé en ce que**
le front d'ondes (74) s'étendant parallèlement ou pour l'essentiel parallèlement au contour de l'objet à contrôler (66) est produit par l'émission temporisée d'impulsions sonores.

15. Procédé selon au moins une des revendications 9 à 14,
**caractérisé en ce que**
la figure d'interférence (76) plane reçue est reçue par commande décalée dans le temps des éléments récepteurs (EL1 - ELN) indépendants les uns des autres en fonction des valeurs de contour déposées dans la mémoire.

16. Circuit (22) pour le traitement de signaux produits pendant le contrôle non destructif d'objets tels que tubes, tôles, par réflexion d'ondes ultrasonores sur des emplacements défectueux de la structure de l'objet, comprenant une unité de détection des signaux (38) avec un générateur d'impulsions (PE) pour commander des éléments émetteurs/récepteurs (EL1 - ELN) en vue de l'émission d'un front complet d'ondes et de la commutation des éléments émetteurs/récepteurs (L1 - EL2) sur réception, un multiplexeur (MUX) au moyen duquel les signaux analogiques situés sur les éléments récepteurs peuvent être transmis à des convertisseurs analogique/numérique (AD1 - ADN) dont les sorties sont reliées à un élément de mémoire (SP) pour enregistrer les signaux numérisés, dans lequel les signaux numérisés sont enregistrés dans l'élément de mémoire (SP) en fonction de leur amplitude de signal et de leur temps de parcours, et un élément totaliseur (SUM) pour l'addition, en verrouillage de phases, des valeurs d'amplitude déposées dans l'élément de mémoire (SP) est monté en aval de l'élément de mémoire (SP), et à la sortie du circuit totaliseur (SUM)un signal est exploitable pour identifier l'emplacement défectueux (20).

17. Circuit selon la revendication 16,
**caractérisé en ce que**
la sortie de l'élément totaliseur (SUM) est reliée de préférence par une interface (I) à un circuit d'exploitation (46), dans lequel une sortie de l'élément totaliseur (SUM) est reliée à un circuit de traitement de signaux (46) qui présente un ou plusieurs composants d'exploitation (F1, F2) pour poursuivre l'évaluation et l'exploitation du signal de sortie de l'élément totaliseur (SUM).

18. Circuit selon la revendication 16 ou 17,
**caractérisé en ce que**
les composants d'exploitation (F1, F2) comportent un circuit de coïncidence pour comparer les signaux totalisés pendant l'addition, en verrouillage de phases, des valeurs d'amplitude le long d'un temps de parcours avec les signaux totalisés pendant l'addition des valeurs d'amplitude des signaux ponctuels d'ondes de défauts extérieurs.

19. Circuit selon la revendication 16 à 18,
**caractérisé en ce que**
la tête de contrôle (14, 26, 28) est un transducteur à réseau piloté en phase.

20. Circuit selon la revendication 16 à 19,
**caractérisé en ce que**
les éléments émetteurs/récepteurs (EL1 - ELN) sont commandés simultanément ou avec décalage de phase.

21. Circuit selon la revendication 16 à 20,
**caractérisé en ce que**
les éléments émetteurs/récepteurs (EL1 - ELN) constituent une unité.

22. Circuit selon la revendication 16 à 19,
**caractérisé en ce que**
les éléments émetteurs et les éléments récepteurs constituent des unités séparées.
